# EUROPEAN PATENT APPLICATION

(11) **EP 4 651 290 A1**
(43) Date of publication of application: **19.11.2025**
(21) Application number: 24747446.3
(22) Date of filing: 24.01.2024
(51) Int. Cl.: H01M 50/383, H01M 10/658, H01M 50/204, H01M 50/264, H01M 50/271, H01M 50/249, H01M 50/543

(54) **BATTERY MODULE COMPRISING FLAME RETARDANT FRAME**

(30) Priority: 25.01.2023 KR 20230009691
(71) Applicant: LG Energy Solution, Ltd., Seoul 07335 (KR)
(72) Inventor: LEE, Jaehyun, Daejeon 34122 (KR)
(74) Representative: Plasseraud IP
(86) International application number: PCT/KR2024/001147
(87) International publication number: WO 2024/158211

(57) **Abstract**

The present invention provides a structure of a battery module including a battery cell assembly; a housing accommodating the battery cell assembly and provided with a first venting hole; a flame retardant cover comprising a flexible sheet with heat-resistant properties and provided with a slit; and a flame retardant frame comprising a rigid plate with heat-resistant properties and provided with a second venting hole on an upper surface thereof, wherein the housing comprises: a frame with open front and rear ends; and a pair of end plates covering the open front and rear ends of the frame, the flame retardant cover covers an upper surface of the housing, and the flame retardant frame covers the upper surface and front and rear surfaces of the housing.

## Description

### [TECHNICAL FIELD]

This application claims the benefit of priority based on Korean Patent Application No. 10-2023-0009691 filed on January 25, 2023, entire content disclosed in the document of the patent applications is included as a part of this specification.

The present invention relates to a battery module including a battery cell assembly with an improved venting structure.

### [BACKGROUND ART]

Secondary batteries, which provides ease of application depending on the product group and have electrical characteristics such as high energy density, are widely applied not only to portable devices, but also to electric vehicles or hybrid vehicles driven by an electrical driving source, and power storage devices. These secondary batteries are attracting attention as a new energy source for improving eco-friendliness and energy efficiency, not only because they have the primary advantage of being able to dramatically reduce the use of fossil fuels, but also because they do not generate any by-products due to energy use.

While small mobile devices use one or two or three battery cells per device, medium to large devices such as vehicles require high output and large capacity. Therefore, a medium to large-sized battery module in which multiple battery cells are electrically connected is used.

Since it is desirable for medium to large-sized battery modules to be manufactured in as small and light as possible, rectangular batteries and pouch-type batteries that may be stacked with high integration and have a small weight-to-capacity battery are mainly used as battery cells for medium to large-sized battery modules.

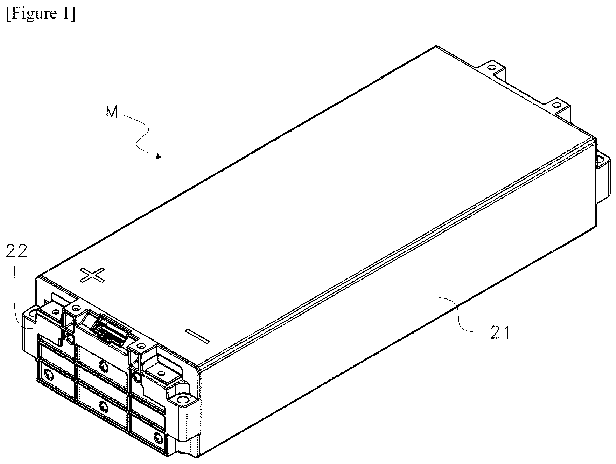

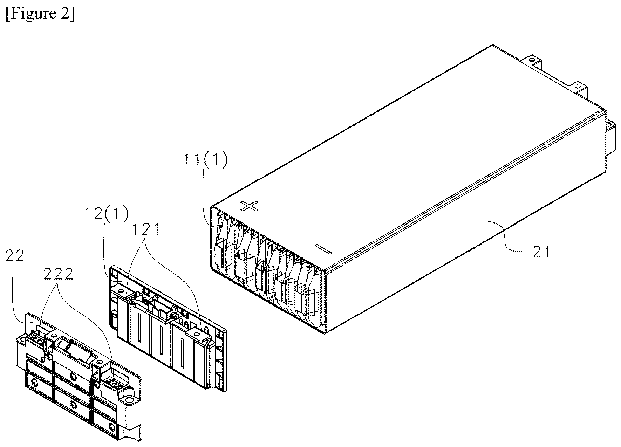

FIGS. 1 and 2 are an exploded perspective view and a perspective view, respectively, illustrating a generic battery module. Referring to FIGS. 1 and 2, a generic battery module M includes a battery cell assembly 1 including a plurality of battery cells 11. A bus bar frame 12 electrically connecting the battery cells 11 to each other may be connected to the battery cell assembly 1. The battery cell assembly 1 is accommodated in a housing 2 together with the bus bar frame 12. The housing may include a frame with open front and rear ends 21 and a pair of end plates 22 covering the open front and rear ends of the frame 21.

The bus bar frame 12 is provided with a pair of terminals 121 that electrically connect the battery cell 11 to the outside. The pair of terminals 121 may be exposed to the outside through a pair of terminal exposing ports 222 provided on the end plate 22, respectively.

The battery cell assembly 1 has a risk of ignition due to shock, short circuit, heating, etc., which results in high-temperature gas generated from the battery cell assembly 1. As a result, the internal pressure of the housing 2 may increase, and rapid increase in such internal pressure may lead to the explosion of the battery module M.

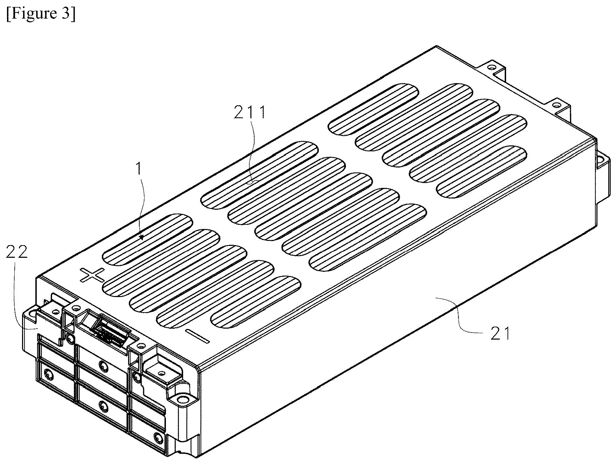

FIG. 3 is a perspective view illustrating a battery module provided with a venting hole. Referring to FIG. 3, the housing 2 may be provided with a venting hole 211 for discharging the high-temperature gas from the inside to the outside of the housing 2.

However, it is problematic that such venting hole 211 also allows the inflow of high-temperature gas generated from other battery modules embedded in the same battery pack. Therefore, such structure has the risk of causing serial ignition due to thermal propagation between battery modules, causing thermal runaway at the pack level.

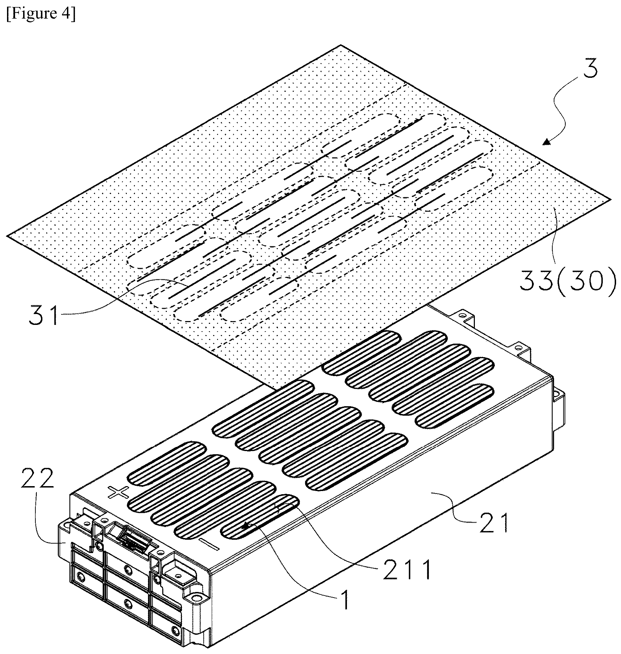

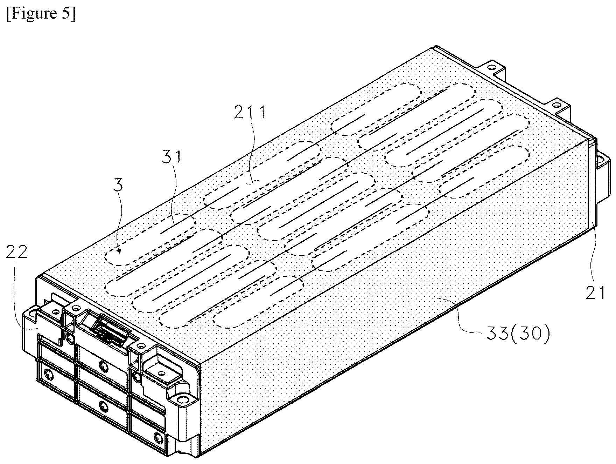

FIGS. 4 and 5 are an exploded perspective view and a perspective view, respectively, illustrating a battery module provided with a venting hole and a flame retardant cover. Referring to FIGS. 4 and 5, in order to solve the problem described above, the battery module includes a flame retardant cover 3 attached to cover the surface of the housing 2 where the venting hole 211 is provided. The flame retardant cover 3 is made of a heat-resistant sheet material, and may prevent high-temperature gas from flowing into the housing 2 from the outside. Here, the flame retardant cover 3 is provided with a slit 31 for discharging high-temperature gas generated in the housing 2.

Meanwhile, while the flame retardant cover 3 may prevent gas inflow and thermal propagation through the upper portion and the lateral portion of the battery module M, it is difficult to prevent gas inflow and thermal propagation through front and rear portions of the battery module M where the terminal exposing port 222 is provided.

In addition, the flame retardant cover 3 is provided with an adhesive such as double-sided tape in a predetermined adhesive area 30 to be attached to the surface of the housing 2. Therefore, it is problematic that the flame retardant cover 3 may be easily detached or lifted due to the vulnerability of the adhesive to heat or excessively high internal pressure of the housing 2 in the battery module with the above-described structure. In addition, since the adhesive area 30 should not be present in the area where the venting hole 211 is provided, applying or attaching the adhesive to the adhesive area 30 should be performed manually, which is cumbersome.

### [DETAILED DESCRIPTION OF THE INVENTION]

### [TECHNICAL PROBLEM]

In order to solve the problem of the above-described prior art, it is an object of the present invention to provide a structure of a battery module having a venting structure capable of preventing gas inflow from the outside while discharging gas from the inside in case of ignition.

It is another object of the present invention to provide a structure of a battery module capable of significantly reducing the possibility of damage to the venting structure due to the flame retardant cover being detached or lifted even when a rapid increase in internal pressure occurs during ignition.

It is yet another object of the present invention to provide a structure of a battery module capable of facilitating discharge of high-temperature gas and heat energy in case of ignition, and preventing thermal propagation through the front and rear portions and two lateral portions of adjacent battery modules.

It is yet another object of the present invention to provide a structure of a battery module provided with a flame retardant cover and a flame retardant frame that may be mounted even after the battery module is integrated and placed within the pack frame and connected to the pack bus bar.

It is yet another object of the present invention to provide a structure of a battery module wherein the surface of the frame may be covered with a flame retardant cover without cumbersome manual work

The technical problems to be solved by the present invention are not limited to the objects described above, and other objects and advantages of the present invention that are not described may be understood through the following description and will be more clearly understood by the examples of the present invention. Additionally, it is apparent that the objects and advantages of the present invention may be embodied by the means and combinations thereof indicated in the claims.

### [TECHNICAL SOLUTION]

In order to solve above-described problems, the present invention provides a structure of a battery module including: a battery cell assembly; a housing accommodating the battery cell assembly and provided with a first venting hole; a flame retardant cover including a flexible sheet with heat-resistant properties and provided with a slit; and a flame retardant frame comprising a rigid plate with heat-resistant properties and provided with a second venting hole on an upper surface thereof, wherein the housing comprises: a frame with open front and rear ends; and a pair of end plates covering the open front and rear ends of the frame, the flame retardant cover covers an upper surface of the housing, and the flame retardant frame covers the upper surface and front and rear surfaces of the housing.

The battery cell assembly may include a plurality of battery cells. The battery cell may be a pouch-type battery cell. However, the battery cell assembly may be constituted by a single electrode assembly or a single battery cell, and may be manufactured by integrating battery cells of other than pouch-type battery cells.

The battery cell assembly may be accommodated in the housing. The housing may include a frame with open front and rear ends and a pair of end plates covering the open front and rear ends of the frame. However, the housing may have any shape as long as the battery cell assembly can be accommodated.

A bus bar frame that electrically connects the battery cells to each other in parallel or in series may be connected to the battery cell assembly. The bus bar frame may be provided with a pair of terminals electrically connected to the battery cells. The terminal may be exposed to the outside through a pair of first terminal exposing ports provided at the end plate.

The first venting hole may be provided at a top plate of the frame. However, the first venting hole may be provided anywhere and in any shape as long as gas is allowed to pass between the inside and outside of the housing.

The flame retardant cover may include a flexible sheet material with heat-resistant properties.

The flame retardant cover may be provided with a slit. A plurality of slits may be provided. It is preferable that the slit is provided at a portion of the flame retardant cover corresponding to the portion of the frame where the venting hole is provided. However, it is not necessary that the slit is provided at a specific location.

The flame retardant frame may include a rigid plate with heat-resistant properties. For example, the flame retardant frame may include heat-resistant synthetic resin material and/or mica material.

The flame retardant cover may cover an upper surface of the housing, and the flame retardant frame may cover the upper surface and front and rear surfaces of the housing. Preferably, the flame retardant frame may have a box shape with open lower side to cover five sides of the housing excluding the lower side. That is, the flame retardant frame may cover the upper surface, front and rear surfaces, and lateral surfaces of the housing.

The flame retardant frame may be formed integrally, or may be formed as an assembly of a plurality of plate members.

The flame retardant frame may be provided with a second venting hole. The second venting hole may be provided at a location corresponding to that of the first venting hole. However, the second venting hole may be provided anywhere and in any shape as long as the high-temperature gas passed through the first venting hole and the slit can be discharged to the outside.

The flame retardant frame may include a pair of second terminal exposing ports. The pair of terminals may be exposed to outside through the pair of second terminal exposing ports, respectively. "Exposed to outside" refers to a state wherein a pack bus bar connecting the battery module to other battery modules through the second terminal exposing port is allowed to be fastened to the pair of terminals with the flame retardant frame covering the front and rear surfaces of the housing.

The pair of second terminal exposing ports may be provided on at least one of the upper surface, lateral surfaces and front surface of the flame retardant frame.

The pair of second terminal exposing ports may extend to the lower end portion of the flame retardant frame. That is, the pair of second terminal exposing ports may be opens not only front portion, rear portion, upper portion or lateral portion of the flame retardant frame not only in forward and backward directions, but also downward portion.

The flame retardant frame may be coupled to the housing. Here, the flame retardant frame may be coupled to the frame or may be coupled to the end plate. The coupling may be achieved in various ways, and it is preferable that the flame retardant frame is not easily released from covering the housing.

The flame retardant cover may be interposed and fixed between the flame retardant frame and the housing. Here, the flame retardant cover may be fixed by friction by being pressed between the flame retardant frame and the housing. Alternatively, the flame retardant cover may be interposed between the flame retardant frame and the housing while being fixed to any one of the flame retardant frame and the housing. However, the method is irrelevant as long as the housing and the flame retardant frame are coupled to each other and the flame retardant cover is interposed and fixed between the flame retardant frame and the housing.

The housing may be provided with a first fastening hole, and the flame retardant frame may be provided with a second fastening hole.

The first fastening hole may be provided at the frame or at the end plate.

Each of the first fastening hole and the second fastening hole may be provided in plurality. For each end plate, two first fastening holes may be provided in total of four, and the number of the second fastening holes may be equal to that of the first fastening holes, and provided at a location corresponding to that of the first fastening holes.

The housing and the flame retardant frame may be coupled to each other by a fastening member penetrating the first fastening hole and the second fastening hole. The fastening member may be, for example, a bolt, rivet, push rivet, etc.

The fastening member may include a heat-resistant material such that the coupling between the housing and the flame retardant frame may not be released even when the battery module ignites.

The battery module according to a first embodiment of the present invention may include a housing including a frame and an end plate, and a plurality of first venting holes may be provided at the upper portion of the frame in a grid form. The flame retardant cover and the flame retardant frame may be sequentially provided on the upper surface of the frame. Here, the flame retardant cover may be provided with a plurality of slits extending in a lengthwise direction thereof, and the flame retardant frame may be provided with a plurality of second venting holes wherein the number thereof may be equal to that of the first venting holes, and the location thereof may correspond to that of the first venting hole.

Additionally, in the battery module according to the first embodiment of the present invention, each end plate may be provided with two first fastening holes, and the flame retardant frame may be provided with two second fastening holes at each of the two lengthwise ends. The flame retardant frame and the end plate may be coupled to each other by the fastening member penetrating the first fastening hole and the second fastening hole. Here, the flame retardant cover may be fixed by being interposed between and pressed by the flame retardant frame and the frame.

The flame retardant frame and the flame retardant cover may be coupled to the housing. Here, the flame retardant frame and the flame retardant cover may be coupled to the frame or to the end plate. The coupling can be achieved in various ways, and it is preferable that the flame retardant frame is not easily released from covering the housing.

The housing, the flame retardant frame and the flame retardant cover may be provided with a first fastening hole, a second fastening hole and a third fastening hole, respectively.

Each of the first fastening hole, the second fastening hole and the third fastening hole may be provided in plurality. For each end plate, two first fastening holes may be provided in total of four, and the number of the second fastening holes and the number of the third fastening holes may be equal to that of the first fastening holes, and provided at a location corresponding to that of the first fastening holes.

The housing, the flame retardant cover and the flame retardant frame may be coupled to one another by a fastening member penetrating the first fastening hole, the second fastening hole and the third fastening hole. The fastening member may be, for example, a bolt, rivet, push rivet, etc.

The fastening member may include a heat-resistant material such that the coupling between the housing, the flame retardant cover and the flame retardant frame may not be released even when the battery module ignites.

In the battery module according to the second embodiment of the present invention, a single second venting hole may be provided in an area corresponding to the area where the first venting hole 211 is provided and the area where the slit 31 is provided.

Additionally, in the battery module according to the second embodiment of the present invention, each end plate may be provided with two first fastening holes, and the flame retardant frame may be provided with two second fastening holes at each of the two lengthwise ends. The flame retardant frame, flame retardant cover and the end plate may be coupled to one another by the fastening member penetrating the first, second and third fastening holes.

The battery module may include wing portions protruding from two widthwise ends of the flame retardant cover and attached to two outer sidewalls of the housing, respectively. The adhesive area of the wing portions provided on the rear surface thereof may be attached to the surface of the two outer sidewalls of the frame.

The present invention also provides a battery pack containing the battery module and a structure of a vehicle containing the battery pack.

In order to increase the charge and discharge capacity and/or power, a plurality of battery modules may be connected to each other in series and/or in parallel to constitute one battery pack. Additionally, the battery pack may be built into the vehicle as a power source for the vehicle.

The battery pack may include a venting passage and a venting device for discharging heat energy and gas which are discharged in upward direction from the battery module. The venting device may be capable of discharging the heat energy and gas by breaking the battery pack when the internal pressure thereof exceeds a predetermined level.

### [ADVANTTAGEOUS EFFECTS]

The present invention may provide a structure of a battery module that facilitates the discharge of gases during ignition while preventing the inflow of gases through a unique frame and cover structure including first and second venting holes and slits.

In addition, the present invention may provide a structure of a battery module wherein the flame retardant cover maintains structural stability without being detached or lifted, despite a rapid increase in internal pressure during ignition.

The present invention may also provide a structure of a battery module capable of preventing thermal propagation from and to other adjacent battery modules by providing a flame retardant frame covering the front and rear portions and two lateral portions of the battery module.

The present invention may also provide a battery module structure in which a flame retardant cover and a flame retardant frame may be mounted even after the battery module is integrated and placed within the pack frame and connected to the pack bus bar.

Another advantage of the present invention is that it is possible to provide a structure of a battery module that may be provided with a flame retardant cover through a simple assembly process that can be automated, without the cumbersome process of manually attaching double-sided tape.

In addition, the present invention may have various other effects, and the descriptions thereof will be given in each embodiment, or the description of the effects that may be easily inferred by a person skilled in the art will be omitted.

### [BRIEF DESCRIPTION OF DRAWINGS]

FIGS. 1 and 2 are an exploded perspective view and a perspective view, respectively, illustrating a generic battery module.
FIG. 3 is a perspective view illustrating a battery module provided with a venting hole.
FIGS. 4 and 5 are an exploded perspective view and a perspective view, respectively, illustrating a battery module provided with a venting hole and a flame retardant cover.
FIGS. 6 and 7 are an exploded perspective view and a perspective view, respectively, illustrating a battery module according to a first embodiment of the present invention.
FIGS. 8 and 9 are an exploded perspective view and a perspective view, respectively, illustrating a battery module according to a second embodiment of the present invention.
FIGS. 10 and 11 are an exploded perspective view and a perspective view, respectively, illustrating a battery module according to a third embodiment of the present invention.
FIG. 12 illustrates a plurality of battery modules connected by a pack bus bar to form a battery pack.
FIGS. 13 and 14 illustrate a flame retardant frame being covered after the pack bus bar is fastened to the battery module according to a third embodiment of the present invention.
FIGS. 15 and 16 illustrate a battery pack containing a battery module according to the present invention and a vehicle containing the battery pack, respectively.

### [DESCRIPTION OF REFERENCE NUMERALS]

1: battery cell assembly
   11: battery cell
   12: bus bar frame
      121: terminal
2: housing
   21: frame
      211: (first) venting hole
   22: end plate
      221: first fastening hole
      222: (first) terminal exposing port
3: flame retardant cover
   30: adhesive area
   31: slit
   32: third fastening hole
   33: wing portion
   4: flame retardant frame
      401: upper surface
      402: front surface
         4021: second terminal exposing port
      403: rear surface
      404: left and right surfaces
   41: second venting hole
   42: second fastening hole
5: fastening member
6: pack bus bar
M: battery module
P: battery pack
V: vehicle
X: longitudinal/forward/backward direction
Y: width direction/left and right direction
Z: height direction/up and down direction

### [DETAILED DESCRIPTION OF THE PREFERRED EMBODIMENTS]

### [DETAILED DESCRIPTION OF THE INVENTION]

The above-described objects, features and advantages will be described in detail hereinafter with reference to the accompanying drawings such that those skilled in the art will be able to implement the technical idea of the present invention. In describing the present invention, when it is determined that a detailed description of prior art related to the present invention unnecessarily obscures the gist of the present invention, the detailed description thereof will be omitted. Hereinafter, preferred embodiments according to the present invention will be described in detail with reference to the accompanying drawings. In the drawings, identical reference numerals are used for indicating identical or similar components.

While "first", "second", etc. are used to describe various elements, these elements are of course not limited by these terms. These terms are only used to distinguish one element from another, and unless specifically stated otherwise, a first element may also be a second element.

Throughout the specification, unless stated otherwise, each element may be singular or plural.

Hereinafter, "arranging an element at upper portion (or lower portion) of an element" or "arranging an element at top (or bottom) of an element" refers to not only "arranging an element to be in contact with upper surface (or lower surface)" but also to "arranging an element above upper surface (or lower surface) with another element interposed therebetween."

Additionally, when an element is described as being "connected to," "coupled to," or "in contact with" another element, it should be understood that the element may be "directly connected to," "directly coupled to," or "directly in contact with" another element, or the element may be "connected to," "coupled to," or "in contact with" another element with yet another element interposed therebetween or via yet another element.

The expressions in singular form used herein include expressions in plural form unless the context explicitly dictates otherwise. Terms such as "consists of" or "comprises" used herein should not be construed as necessarily including all of the elements or steps described in the specification, and should be construed as not including some of the elements or steps, or including additional elements or steps.

Throughout the specification, "A and/or B" refers to A, B or A and B unless specifically stated otherwise, and "C to D" refers to from equal to or higher than C to equal to or lower D unless specifically stated otherwise.

The present invention provides a structure of a battery module with an improved venting structure.

The present invention may be applied to any secondary batteries including a battery cell or cell assembly and a housing accommodating the battery cell or the cell assembly, regardless of the type or structure of the battery cell or battery cell assembly, and regardless of the specific structure and name of the housing accommodating the battery cell or battery cell assembly.

First, a general structure of a battery module, which is a basis of a battery module according to an embodiment of the present invention, will be described with reference to the drawings.

FIGS. 1 and 2 are an exploded perspective view and a perspective view, respectively, illustrating a generic battery module. Referring to FIGS. 1 and 2, a generic battery module may include a battery cell assembly 1 and a housing 2 accommodating the battery cell assembly 1.

The battery cell assembly 1 may include a plurality of battery cells 11. The battery cell 11 may be a pouch-type battery cell. However, the battery cell assembly 1 may be a single electrode assembly or a single battery cell, and may be manufactured by integrating battery cells other than a pouch-type battery cell.

The battery cell assembly 1 may be connected to a bus bar frame 12 that electrically connects the battery cells 11 to each other in parallel or in series. The bus bar frame 12 may be provided with a pair of terminals 121 electrically connected to the battery cells. The terminal 121 may be exposed to the outside through a pair of first terminal exposing ports 222 provided at the pair of end plates 22, respectively.

The battery cell assembly 1 may be accommodated in the housing 2. The housing 2 may include a frame 21 with open front and rear ends and a pair of end plates 22 covering the open front and rear ends of the frame 21. However, the housing 2 may have any shape as long as the battery cell assembly 1 can be accommodated therein.

Hereinafter, a preferred embodiment of the present invention will be described with reference to the accompanying drawings.

### [FIRST EMBODIMENT]

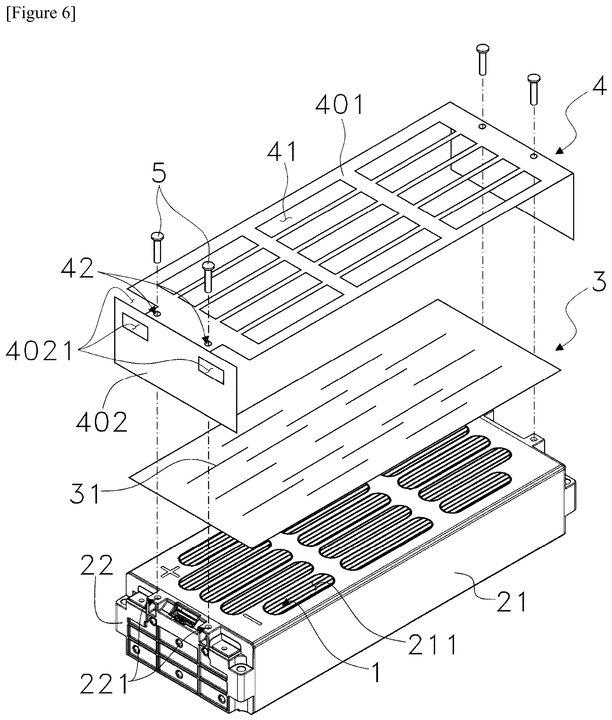

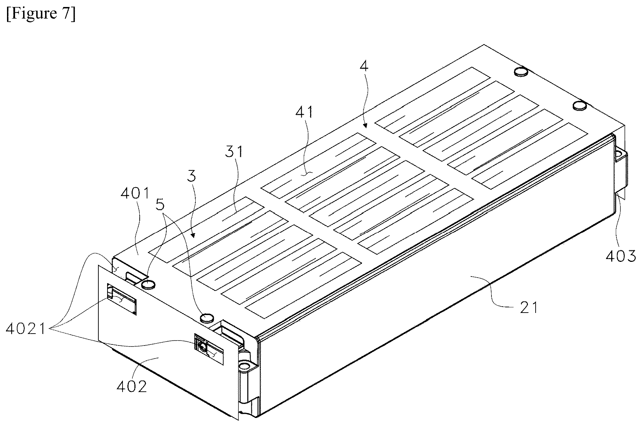

FIGS. 6 and 7 are an exploded perspective view and a perspective view, respectively, illustrating a battery module according to a first embodiment of the present invention. Referring to FIGS. 6 and 7, the battery module according to the first embodiment may include a housing 2 provided with a first venting hole 211, a flame retardant cover 3 and a flame retardant frame 4 as in a generic battery module.

The first venting hole 211 may be provided at a top plate of the frame 21. However, the first venting hole 211 may be provided anywhere and in any shape as long as gas is allowed to pass between the inside and outside of the housing 2.

The flame retardant cover 3 may include a flexible sheet material with heat-resistant properties.

The flame retardant cover 3 may be provided with a slit 31. A plurality of slits 31 may be provided. It is preferable that the slit 31 is provided at a portion of the flame retardant cover 3 corresponding to the portion of the frame 21 where the venting hole 211 is provided. However, it is not necessary that the slit 31 is provided at a specific location.

The flame retardant frame 4 may include a rigid plate with heat-resistant properties. For example, the flame retardant frame 4 may include heat-resistant synthetic resin material and/or mica material.

The flame retardant frame 4 may be provided with a second venting hole 41. The second venting hole 41 may be provided at a location corresponding to that of the first venting hole 211. However, the second venting hole 41 may be provided anywhere and in any shape as long as the high-temperature gas passed through the first venting hole 211 and the slit 31 can be discharged to the outside.

The flame retardant cover 3 and the flame retardant frame 4 may sequentially cover the surface of the housing 2. That is, the flame retardant may cover 3 covers at least a portion of the surface of the housing 2, and the flame retardant frame 4 may again cover a predetermined area of the surface of the housing 2 at least including the portion covered by the flame retardant cover 3.

Here, the flame retardant cover 3 may cover the upper surface of the housing 2, and the flame retardant frame 4 may cover the upper surface and front and rear surfaces of the housing 2.

The flame retardant frame 4 may be formed integrally, or may be formed as an assembly of a plurality of plate members.

The flame retardant frame 4 may include a pair of second terminal exposing ports 4021. The pair of terminals 121 may be exposed to outside through the pair of second terminal exposing ports 4021, respectively. "The pair of terminals 121 is exposed to outside" refers to a state wherein a pack bus bar connecting the battery module to other battery modules through the second terminal exposing port 4021 is allowed to be fastened to the pair of terminals 121 with the flame retardant frame 4 covering the front and rear surfaces of the housing 2.

The pair of second terminal exposing ports 4021 may be provided on at least one of the upper surface, lateral surfaces and front surface of the flame retardant frame 4. That is, the second terminal exposing port 4021 may be provided at the front surface of the flame retardant plate 4 such that the pack bus bar connecting the battery module to other battery modules at front and back sides may pass, or at the lateral side and/or upper side of the flame retardant plate 4 such that the pack bus bar connecting the battery module to other battery modules at the left and right sides may pass.
The flame retardant frame 4 may be coupled to the housing 2. Here, the flame retardant frame 4 may be coupled to the frame 21 or to the end plate 22. The coupling may be achieved in various ways, and it is preferable that the flame retardant frame 4 is not easily released from covering the housing 2.

The flame retardant cover 3 may be interposed and fixed between the flame retardant frame 4 and the housing 2. Here, the flame retardant cover 3 may be fixed by friction by being pressed between the flame retardant frame 4 and the housing 2. Alternatively, the flame retardant cover 3 may be interposed between the flame retardant frame 4 and the housing 2 while being fixed to any one of the flame retardant frame 4 and the housing 2. For example, the flame retardant cover 3 may be interposed and fixed between the flame retardant frame 4 and the housing 2 as the flame retardant frame 4 is coupled to the housing 2 with the upper surface of the flame retardant cover 3 and the bottom surface of the flame retardant frame 4 adhered to each other. However, the method is irrelevant as long as the housing 2 and the flame retardant frame 4 are coupled to each other and the flame retardant cover 3 is interposed and fixed between the flame retardant frame 4 and the housing 2.

The housing 2 may be provided with a first fastening hole 221, and the flame retardant frame 4 may be provided with a second fastening hole 42.

The first fastening hole 221 may be provided at the frame 21 or at the end plate 22.

Each of the first fastening hole 221 and the second fastening hole 42 is provided in plurality. For each end plate 22, two first fastening holes 221 may be provided in total of four, and the number of the second fastening holes 42 may be equal to that of the first fastening holes 221, and provided at locations corresponding to that of the first fastening holes 221.

The housing 2 and the flame retardant frame 4 may be coupled to each other by a fastening member 5 penetrating the first fastening hole 221 and the second fastening hole 42. The fastening member 5 may be, for example, a bolt, rivet, push rivet, etc.

The fastening member 5 may include a heat-resistant material such that the coupling between the housing 2 and the flame retardant frame 4 may not be released even when the battery module ignites.

The battery module according to the first embodiment of the present invention may include the housing 2 including the frame 21 and the end plate 22, and a plurality of first venting holes 211 may be provided at the upper portion of the frame 21 in a grid form. The flame retardant cover 3 may be provided on the upper surface of the frame 21, and the flame retardant frame 4 may cover the upper surface and front and rear surfaces of the housing 2 including the flame retardant cover 3. Here, the flame retardant cover 3 may be provided with a plurality of slits 31 extending in a lengthwise direction thereof. The flame retardant frame 4 may be provided with a plurality of second venting holes 41 wherein the number thereof may be equal to that of the first venting holes 211, and the location thereof may correspond to that of the first venting hole 211. The flame retardant frame 4 may also be provided with a pair of the second terminal exposing ports 4021 exposing the pair of terminal 121 to outside, respectively.

According to the first embodiment, when the battery cell assembly 1 ignites, high-temperature gas may be discharged through the first venting hole 211, the slit 31 and the second venting hole. Here, as the flame retardant cover 3 is made of a flexible body, the slit 31 normally remains closed unless the internal pressure of the battery module increases. Accordingly, in the battery module according to the first embodiment, while the high-temperature gas generated in the housing is smoothly discharged, the inflow of high-temperature gas from the outside is prevented. As a result, thermal propagation between battery modules within the battery pack and thermal runaway at the pack level are prevented.

Generally, when a battery module ignites, gas and heat energy are likely to leak through the front and rear sides of the battery module where the terminal is exposed and other battery modules are connected. However, in the battery module according to the first embodiment, the front and rear sides are covered with the flame retardant frame 4 such that high-temperature gas and heat energy are discharged in upward direction rather than front and rear directions.

Additionally, in the battery module according to the first embodiment of the present invention, each end plate 22 may be provided with two first fastening holes 221, and the flame retardant frame 4 may be provided with two second fastening holes 42 at each of the two lengthwise ends. The flame retardant frame 4 and the end plate 22 may be coupled to each other by the fastening member 5 penetrating the first fastening hole 221 and the second fastening hole 42. Here, the flame retardant cover 3 may be fixed by being interposed between and pressed by the flame retardant frame 4 and the frame 21.

Accordingly, according to the first embodiment, since the flame retardant cover 3 is interposed and pressed between the flame retardant frame 4 and the frame 21 to be fixed rather than being attached to the housing 2 with double-sided tape, etc., the flame retardant cover 3 may not be detached or lifted even when the internal pressure drastically increases during the ignition of the battery module. Additionally, according to the first embodiment, in covering the housing 2 with the flame retardant cover 3, it is advantageous that a labor-intensive manual process is eliminated and complete automation is possible.

### [SECOND EMBODIMENT]

Hereinafter, parts not separately described in the second embodiment are the same as those of the first embodiment.

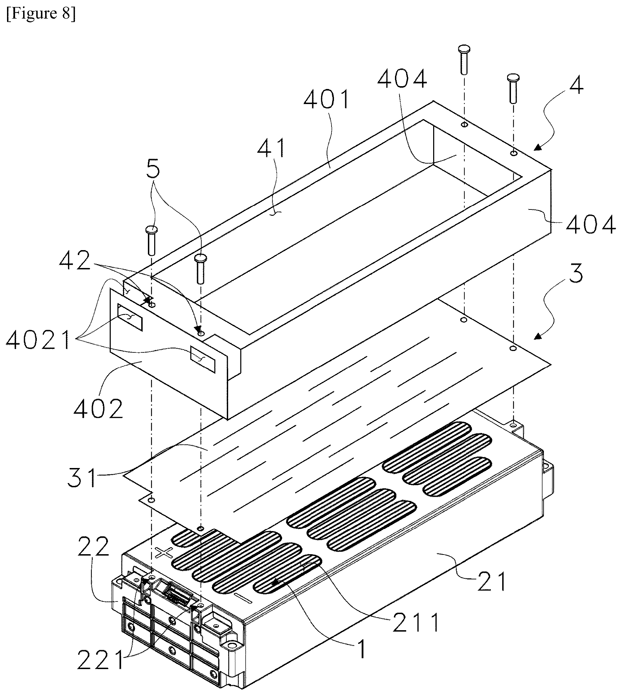

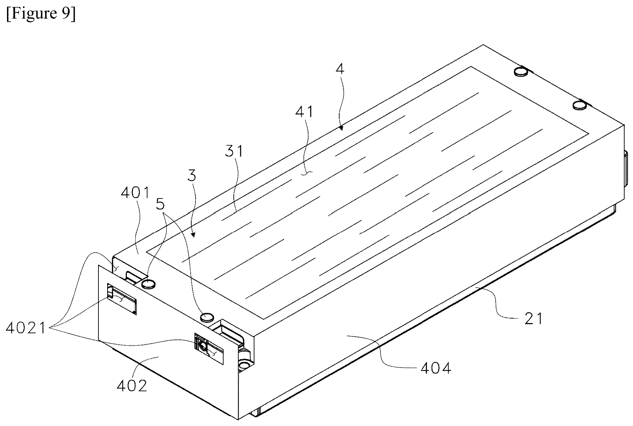

FIGS. 8 and 9 are an exploded perspective view and a perspective view, respectively, illustrating a battery module according to the second embodiment of the present invention. Referring to FIGS. 8 and 9, a single second venting hole 41 according to the second embodiment may be provided. The second venting hole 41 may be provided to correspond to an area of the flame retardant cover 3 where the slit 31 is provided excluding the edge area of the upper plate of the flame retardant frame 4. Accordingly, the flame retardant frame 4 may be provided to press the edge area of the flame retardant cover 3 against the housing 2.

Here, the flame retardant frame 4 may have a box shape with open lower side to cover five sides of the housing 2 excluding the lower side. That is, the flame retardant frame 4 may cover the upper surface, front and rear surfaces, and lateral surfaces of the housing 2.

Additionally, in the battery module according to the second embodiment, not only the flame retardant frame 4 but also the flame retardant cover 3 may be coupled to the housing 2. Here, the flame retardant frame 4 and the flame retardant cover 3 may be coupled to the frame 21 or to the end plate 22. The coupling may be achieved in various ways, and it is preferable that the flame retardant frame 4 and the flame retardant cover 3 are not easily released from covering the housing.

The flame retardant cover 3 and the flame retardant frame 4 are coupled to the housing 2 with the upper surface of the flame retardant cover 3 and the bottom surface of the flame retardant frame 4 adhered to each other. However, the flame retardant cover 3 and the flame retardant frame 4 may not be coupled to each other but coupled to the housing 2 by common or individual means.

The flame retardant cover 3 may be provided with a third fastening hole 32.

Each of the first fastening hole 221, the second fastening hole 42 and the third fastening hole 32 may be provided in plurality. For each end plate 22, two first fastening holes 221 may be provided in total of four, and the number of the second fastening holes 42 and the number of the third fastening holes 32 may be equal to that of the first fastening holes 221, and provided at locations corresponding to that of the first fastening holes 221.

Here, the third fastening hole 32 may be provided at a portion of the flame retardant cover 3 that protrudes in forward direction and avoids the area where the second terminal exposing port 4021 is provided such that the pair of terminals 121 is exposed to the outside through the second terminal exposing port 4021.

The housing 2, the flame retardant cover 3 and the flame retardant frame 4 may be coupled to one another by a fastening member 5 penetrating the first fastening hole 221, the second fastening hole 42 and the third fastening hole 32. The fastening member 5 may be, for example, a bolt, rivet, push rivet, etc.

The fastening member 5 may include a heat-resistant material such that the coupling between the housing 2, the flame retardant cover 3 and the flame retardant frame 4 may not be released even when the battery module ignites.

In the battery module according to the second embodiment, a single second venting hole 41 may be provided in an area corresponding to the area where the first venting hole 211 is provided and the area where the slit 31 is provided.

Additionally, in the battery module according to the second embodiment, each end plate 22 may be provided with two first fastening holes 221, and the flame retardant frame 4 may be provided with two second fastening holes 42 at each of the two lengthwise ends. The flame retardant frame 4, flame retardant cover 3 and the end plate 22 may be coupled to one another by the fastening member 5 penetrating the first fastening hole 221, the second fastening hole 42 and the third fastening hole 32.

According to the second embodiment, when the internal pressure of the housing 2 increases due to ignition of the battery module, the flame retardant cover 3 may expand more in upward direction, and accordingly, the slit 31 may expand more, thereby discharging the gas more smoothly. Contrarily, since the structure of the lower side of the flame retardant cover 3 is the same as that of the first embodiment, the flame retardant cover 3 does not expand more downward, thereby preventing the inflow of gas in the same way as in the first embodiment.

In addition, according to the second embodiment, since the flame retardant cover 3 is coupled to the end plate 22 together with the flame retardant frame 4, the risk of the flame retardant cover 3 being released during ignition may be further reduced.

Additionally, according to the second embodiment, since the flame retardant frame 4 covers the two lateral surfaces of the housing 2, heat is prevented from propagating from one battery module to other battery modules adjacent in the widthwise direction. In addition, heat propagation from other battery modules to the battery module is also prevented.

### [THIRD EMBODIMENT]

Hereinafter, parts not separately described in the third embodiment are the same as those of the first embodiment and the second embodiment.

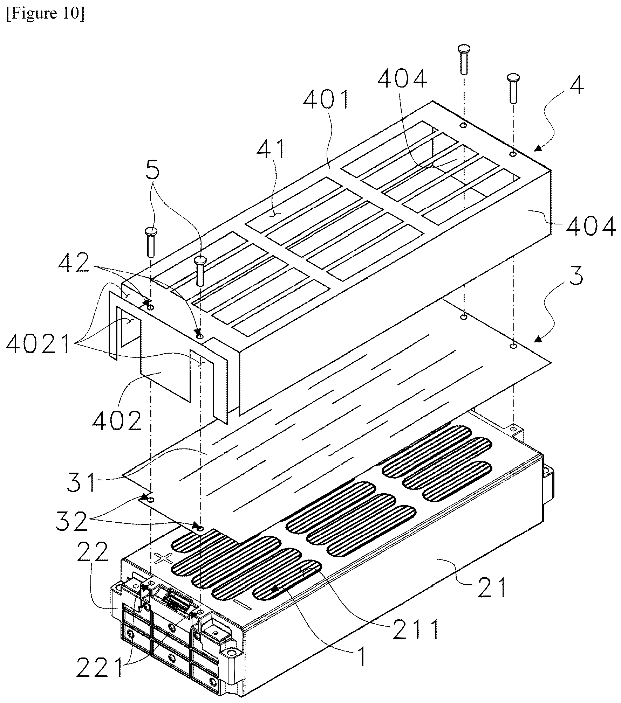

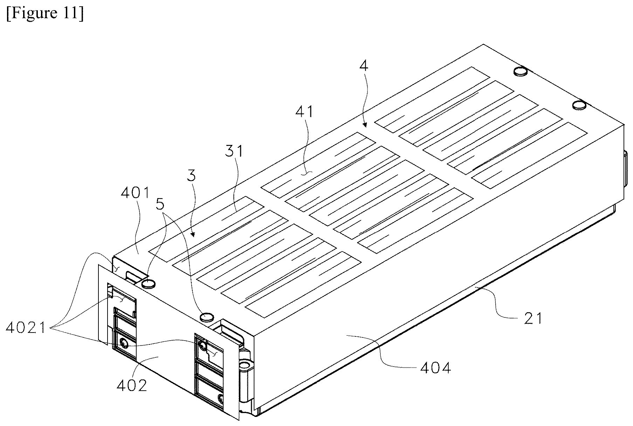

FIGS. 10 and 11 are an exploded perspective view and a perspective view, respectively, illustrating a battery module according to a third embodiment of the present invention. Referring to FIGS. 10 and 11, the pair of second terminal exposing ports 4021 according to the third embodiment may extend to the front lower end portion of the flame retardant frame 4. That is, the pair of second terminal exposing ports 4021 may be open not only in forward and backward directions but also in downward direction.

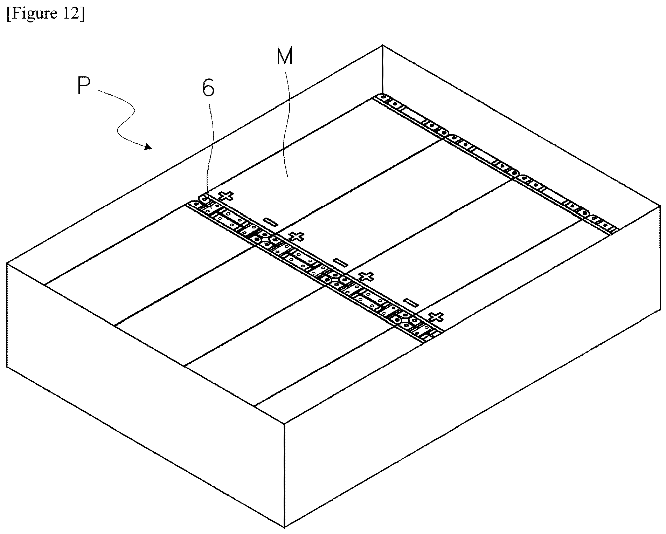

FIG. 12 illustrates a plurality of battery modules connected by a pack bus bar to form a battery pack. Referring to FIG. 12, in order to increase the charge and discharge capacity and/or power, a plurality of battery modules M may be connected to each other in series and/or in parallel to form a single battery pack P. Additionally, the battery pack P may be built into a vehicle V as a power source thereof.

Here, each of the battery modules M may be connected to each other in series or in parallel by the pack bus bar 6 connected to the terminals.

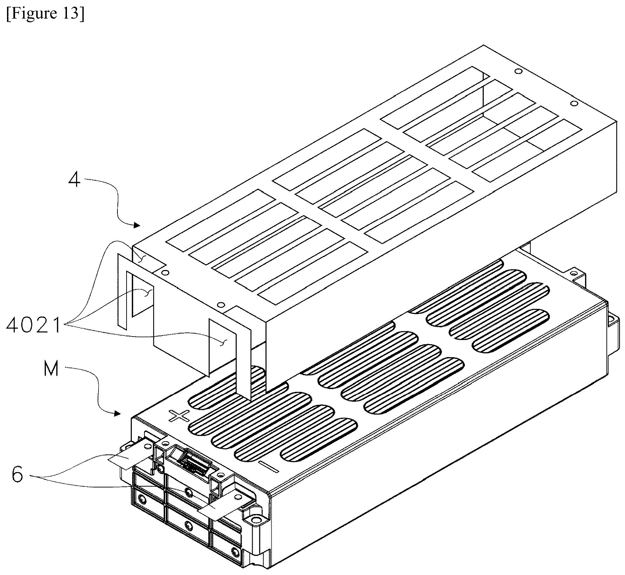

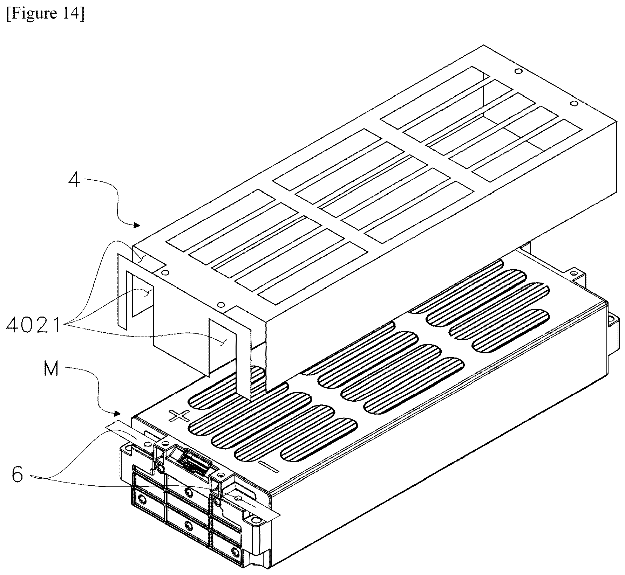

FIGS. 13 and 14 illustrate a flame retardant frame being covered after the pack bus bar is fastened to the battery module according to the third embodiment of the present invention. Referring to FIG. 13 and 14, the flame retardant frame 4 according to the third embodiment may be covered even when a plurality of battery modules M are placed on the pack frame and the pack bus bar 6 is fastened.

Here, as shown in FIG. 13, the pack bus bar 6 may extend in forward and backward directions to connect the battery module M to other battery modules at front and back sides, or as shown in FIG. 14, the pack bus bar 6 may extend in left and right directions to connect the battery module M to other battery modules at left and right sides. Accordingly, the second terminal exposing port 4021 may be provided at the front side or at lateral sides and upper side. The position and the shape of the second terminal exposing port 4021 may be selected in one or more ways depending on the arrangement and connection relationship of the battery module M. Here, it is not necessary that all of the flame retardant frames 4 have the same shape. In addition, the second terminal exposing ports 4021 may have any shape as long as the second terminal exposing ports 4021 extend to the lower end portion of the flame retardant frame 4 is covered while being connected to the battery module M by the pack bus bar.

While it is impossible to mount the flame retardant frame after the pack bus bar is fastened in the battery module according to the first embodiment and the second embodiment, the flame retardant frame 4 and the battery module M may be vertically coupled to each other with the pack bus bar 6 fastened to the terminal according to the third embodiment due to the second terminal exposing port 4021 being open downward.

The present invention also provides a battery pack including the battery module and a structure of a vehicle including the battery pack.

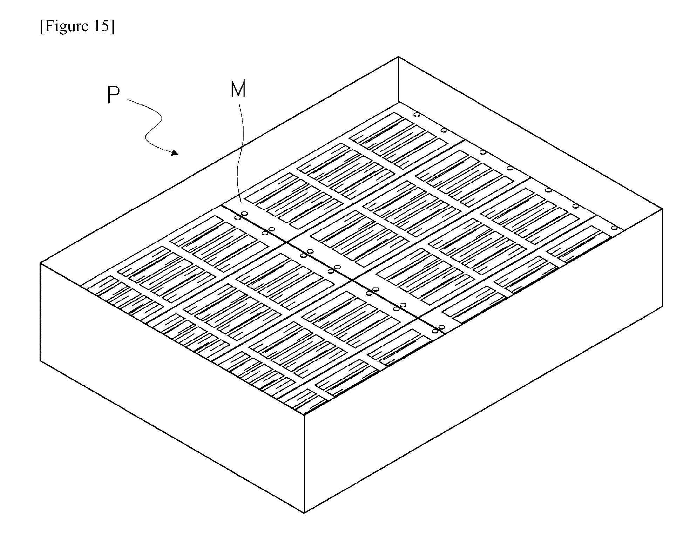

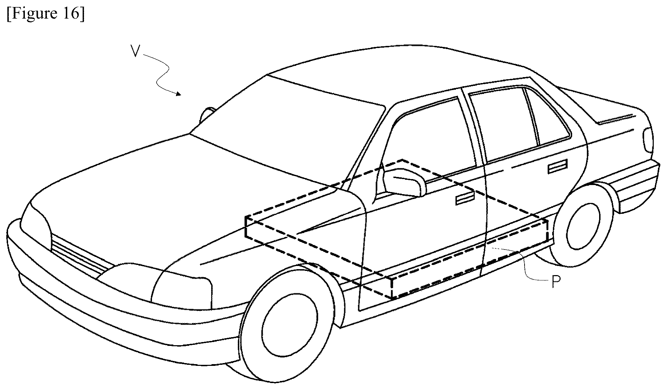

FIGS. 15 and 16 illustrate a battery pack containing a battery module according to the present invention and a vehicle containing the battery pack, respectively. Referring to FIGS. 15 and 16, a plurality of the battery modules M according to the present invention may be integrated and arranged within one pack frame to form a battery pack P.

The battery pack P may include a venting passage and a venting device for discharging heat energy and gas which are discharged in upward direction from the battery module M. The venting device may be capable of discharging the heat energy and gas by breaking the battery pack P when the internal pressure thereof exceeds a predetermined level. The effect of preventing gas discharge and inflow of the battery module according to the present invention will be more significant in a situation where the internal pressure of the battery pack P is increasing before the venting device breaks the battery pack P.

Since the general structure and the manufacturing method of the battery pack P and the vehicle V are known to those skilled in the art, separate description thereof will not be given herein.

It should be understood that the described embodiments are illustrative in all respects and not restrictive, and the scope of the present invention will be indicated by the following claims rather than the described detailed description. And the meaning and scope of the claims to be described later, as well as all changes and modifications derived from the equivalent concept should be interpreted as being included in the scope of the present invention.

Although the present invention has been described with reference to the exemplified drawings, it is to be understood that the present invention is not limited to the embodiments and drawings disclosed in this specification, and those skilled in the art will appreciate that various modifications are possible without departing from the scope and idea of the present invention. Further, although the operating effects according to the configuration of the present invention are not explicitly described while describing an embodiment of the present invention, it should be appreciated that predictable effects are also to be recognized by the configuration.

## Claims

1. A battery module comprising:
a battery cell assembly;
a housing accommodating the battery cell assembly and provided with a first venting hole;
a flame retardant cover comprising a flexible sheet with heat-resistant properties and provided with a slit; and
a flame retardant frame comprising a rigid plate with heat-resistant properties and provided with a second venting hole on an upper surface thereof,
wherein the housing comprises: a frame with open front and rear ends; and a pair of end plates covering the open front and rear ends of the frame,
the flame retardant cover covers an upper surface of the housing, and
the flame retardant frame covers the upper surface and front and rear surfaces of the housing.

2. The battery module of claim 1, wherein the flame retardant frame has a box shape with open lower side to cover the upper surface, front and rear surfaces, and lateral surfaces of the housing.

3. The battery module of claim 1, further comprising a pair of terminals electrically connected to the battery cell assembly,
wherein each of the pair of end plates is provided with a pair of first terminal exposing ports exposing the pair of terminals to outside, respectively, and
the flame retardant frame is provided with a pair of second terminal exposing ports exposing the pair of terminals to outside, respectively, at portions thereof corresponding to the pair of first terminal exposing port, respectively.

4. The battery module of claim 3, wherein the pair of second terminal exposing ports extends to a lower end portion of the flame retardant frame.

5. The battery module of claim 1, wherein the second venting hole is provided at a location corresponding to that of the first venting hole.

6. The battery module of claim 1, wherein the flame retardant frame is coupled to the housing, and
the flame retardant cover is interposed and fixed between the flame retardant frame and the housing.

7. The battery module of claim 6, wherein the flame retardant frame is coupled to the frame.

8. The battery module of claim 6, wherein the flame retardant frame is coupled to the pair of end plates.

9. The battery module of claim 6, wherein the housing and the flame retardant frame are provided with a first fastening hole and a second fastening hole, respectively, and
the housing and the flame retardant frame are coupled to each other by a fastening member penetrating the first fastening hole and the second fastening hole.

10. The battery module of claim 9, wherein each of the first fastening hole and the second fastening hole is provided in plurality.

11. The battery module of claim 10, wherein the housing comprises: a frame with open front and rear ends; and a pair of end plates covering the open front and rear ends of the frame,
two first fastening holes are provided at each of the pair of end plates, and
the second fastening hole is provided at locations corresponding to the first fastening holes.

12. The battery module of claim 9, wherein the fastening member comprises a heat-resistant material.

13. The battery module of claim 1, wherein the flame retardant frame and the flame retardant cover are coupled to the housing.

14. The battery module of claim 13, wherein the flame retardant frame and the flame retardant are coupled to the frame.

15. The battery module of claim 13, wherein the flame retardant frame and the flame retardant cover are coupled to the end plate.

16. The battery module of claim 13, wherein the housing, the flame retardant frame and the flame retardant cover are provided with a first fastening hole, a second fastening hole and a third fastening hole, respectively, and
the housing, the flame retardant cover and the flame retardant frame are coupled to one another by a fastening member penetrating the first to third fastening holes.

17. The battery module of claim 16, wherein each of the first to third fastening holes is provided in plurality.

18. The battery module of claim 17, wherein two first fastening holes are provided at each of the pair of end plates, and
each of the second and third fastening holes are provided at locations corresponding to the first fastening holes.

19. The battery module of claim 16, wherein the fastening member comprises heat-resistant material.

20. The battery module of claim 1, wherein the flame retardant frame comprises a heat-resistant synthetic resin material.

21. The battery module of claim 1, wherein the flame retardant frame comprises mica material.

22. A battery pack comprising a battery module of any one of claims 1 to 21.

23. A vehicle comprising a battery pack of claim 22.
